(19) Europäisches Patentamt
European Patent Office
Office européen des brevets

(11) EP 0 631 925 B1

# (12) EUROPEAN PATENT SPECIFICATION

(45) Date of publication and mention of the grant of the patent:
**23.09.1998 Bulletin 1998/39**

(51) Int. Cl.$^6$: **B62D 29/00**

(21) Application number: **94304836.3**

(22) Date of filing: **01.07.1994**

## (54) Structure and method for joining extruded members

Aufbau und Verfahren zum Zusammenfügen von Strangpressprofilen

Structure et procédé pour assembler des profilés filés

(84) Designated Contracting States:
**DE FR GB IT**

(30) Priority: **02.07.1993 JP 164795/93**

(43) Date of publication of application:
**04.01.1995 Bulletin 1995/01**

(73) Proprietor:
**HONDA GIKEN KOGYO KABUSHIKI KAISHA**
**Minato-ku, Tokyo 107 (JP)**

(72) Inventors:
- **Fujita, Shigeo,**
**c/o Kabushiki Kaisha Honda**
**Wako-shi, Saitama (JP)**
- **Yoshida, Sugura,**
**c/o Kabushiki Kaisha Honda**
**Wako-shi, Saitama (JP)**
- **Sato, Masakazu,**
**c/o Kabushiki Kaisha Honda**
**Wako-shi, Saitama (JP)**

(74) Representative:
**Cheyne, John Robert Alexander Mackenzie et al**
**Haseltine Lake & Co.,**
**Imperial House,**
**15-19 Kingsway**
**London WC2B 6UD (GB)**

(56) References cited:
**WO-A-90/02680** **WO-A-90/10797**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 631 925 B1

## Description

The present invention relates to a structure for joining an extrudate member and a mating member together, and particularly, to an improvement in a structure and a method for joining an extrudate member having a closed sectional structure portion and a mating rod member while placing an end of the extrudate member so as to intersect the mating member.

In the prior art joining structure of this type, a butt welding joint or a joint member has been utilized at a junction between the extrudate member and the mating member.

However, if the butt welding joint is employed, a preselected joining jig is required and hence, the handling of the jig is troublesome, resulting in a degraded joining operability. Further, if the joint member is employed, the number of parts is correspondingly increased, and the construction is complicated.

EP-A-0547346 discloses an extruded suspension component joined to an elongate mating member. This document discloses a joint structure comprising:

an extrudate member (the suspension component) having a closed sectional structure portion and an integral joining region; and
an elongated mating member having a longitudinal axis;
the joining region including a joint portion having a shape conformed to a shape of an outer surface of said elongated mating member so as to encircle at least a portion of said mating member, said joint portion being joined to the outer peripheral surface of said mating member.

In the structure of EP-A-0547346, the longitudinal axes of the extrudate member and the elongate mating member are parallel, the joint portion being created by the extrusion process by which the extrudate member is formed. It is not possible to use such a structure if the longitudinal axes of the extrudate member and the elongate mating member are to intersect.

The joint structure of the preamble of claim 1 is shown in EP-A-0078551.

According to one aspect of the present invention, the closed sectional structure portion of said extrudate member has a polygonal cross-section and the joint portion is formed by an extension of at least one side of said polygonal-shaped closed sectional structure portion.

In this joint structure, no separate joint member is used, leading to a simplified construction. In addition, since the joint portion is joined to the mating member in a state where the joint portion is matched to the outer surface of the mating member so as to encircle the latter, the structure has a high joining strength.

According to another aspect of the present invention, there is provided a method for joining an extrudate member and an elongated mating member, in which said extrudate member has a closed sectional structure portion and an integral joining end for joining to said elongated mating member characterized in that the method comprises the steps of:

forming a notch in the integral joining end of the closed sectional structure portion of said extrudate member so as to extend longitudinally of the extrudate member
subjecting a portion of the extrudate member around said notch to plastic working to provide a joint portion having a shape conformed to the shape of an outer surface of said mating member so as to encircle at least a portion of said mating member; and
joining said joint portion to said outer surface of said mating member such that the longitudinal axis of said extrudate member intersects the longitudinal axis of said elongated mating member.

In the above joining method, by matching the joint portion to the outer surface of the mating member, the positioning of the extrudate member relative to the mating member can be achieved and hence, a joining jig is not required, leading to an improved joining operatability.

For a better understanding of the present invention and to show how the same may be carried into effect, reference will now be made, by way of example, to the accompanying drawings, in which:-

Fig. 1 is a perspective view of one example of an extrudate member;
Fig. 2 is a cutaway perspective view of an essential portion of one example of a mating member;
Fig.3 is a perspective view of an extrudate member having a notch defined therein;
Fig.4 is a perspective view of an extrudate member having a joint portion;
Fig.5 is a plan view of the extrudate member having the joint portion;
Fig.6 is a perspective view of the extrudate member and a mating member shown as being assembled to each other;
Fig.7 is a sectional view taken along a line 7-7 in Fig.6;
Fig.8 is a perspective view of another example of an extrudate member;
Fig.9 is a cutaway perspective view of an essential portion of another example of a mating member;
Fig.10 is a perspective view of an extrudate member with notches defined therein;
Fig.11 is a perspective view of an extrudate member having a joint portion;
Fig.12 is a perspective view of the extrudate member and a mating member shown as being assembled to each other;

Fig.13 is a sectional view taken along a line 13-13 in Fig.12; and

Fig.14 is a diagrammatic perspective illustration of a frame structure for a vehicle body.

Figs.1 to 7 illustrate a first embodiment of the present invention.

Referring to Fig.1, an extrudate member $A_1$ is formed from an aluminum alloy and includes a closed sectional structure portion $a_1$ having a dovetailed annular section. This closed sectional structure portion $a_1$ comprises a first flat portion 3, a second flat portion 4 opposed to and shorter than the first flat portion 3, a first inclined portion 5 interconnecting opposing first side edges of the first and second flat portions 3 and 4, and a second inclined portion 6 interconnecting opposing second side edges of the first and second flat portions 3 and 4. Overhangs 7 and 8 are provided on opposite side edges of the first flat portion 3 of the closed sectional structure portion $a_1$, such that they are located on the same plane as the first flat portion 3.

Referring to Fig.2, a mating member $B_1$ for the extrudate member $A_1$ is produced using an aluminum alloy material, as is the extrudate member $A_1$. The mating member $B_1$ includes a closed sectional structure portion $b_1$ having a dovetailed annular section. This closed sectional structure portion $b_1$ comprises a first flat portion 9, a second flat portion 10 opposed to and shorter than the first flat portion 9, a first inclined portion 11 interconnecting opposing first side edges of the first and second flat portions 9 and 10, and a second inclined portion 12 interconnecting opposing second side edges of the first and second flat portions 9 and 10. An overhang 13 is provided on one of the side edges of the first flat portion 9 of the closed sectional structure portion $b_1$, such that it is located on the same plane as the first flat portion 9. And an overhang 14 having a hook-like section is provided on the other side edge of the first flat portion 9.

The first inclined portion 11 is formed flat, while the second inclined portion 12 is formed in a stepped manner and has an engaging groove $15_1$ in its outer surface to extend along the side edge of the second flat portion 10.

In order to joint an end of the extrudate member $A_1$ having the closed sectional structure portion $a_1$ to a longitudinally intermediate portion of the mating member $B_1$ such that they extend across each other, following steps are carried out in sequence:

(a) As shown in Fig.3, the first flat portion 3 of the closed sectional structure portion $a_1$ is cut off partially at the end of the extrudate member $A_1$ to define a notch $16_1$ extending along the longitudinal axis of the extrudate member $A_1$.

(b) As shown in Figs.4 and 5, a portion of the extrudate member $A_1$ around the notch $16_1$ is subjected to a bending including a development as a plastic working thereby to form a joing portion $c_1$.

The joint portion $c_1$ is formed into a shape conforming to a profile of an outer surface of the mating member $B_1$, e.g., a shape of an outer surface area extending from the flat overhand 13 via the first inclined portion 11 and the second flat portion 10 to the engage groove $15_1$ of the second inclined portion 12 in this embodiment, so as to encircle a portion of the mating member $B_1$. The joint portion $c_1$ is formed out of portions of the first flat portion 3 and the overhangs 7 and 8. More particularly, the joint portion $c_1$ includes a first planar portion 17 corresponding to the flat overhang 13 of the mating member $B_1$, a first slope portion 19 which is continuously formed with the first planar portion 17 and divided into two by a dovetailed hole 18 and which corresponds to the first inclined portion 11 of the mating member $B_1$, a second planar portion 20 continuously formed with the first slope portion 19 and the second flat portion 4 and corresponding to the second flat portion 10 of the mating member $B_1$, a second slope portion 21 continuously formed with the second planar portion 20 and corresponding to a portion of the second inclined portion 12, and an engaging claw $22_1$ continuously formed with the second slope portion 21 and corresponding to the engaging groove $15_1$.

As is best shown in Fig. 5, the length of the joint portion $c_1$ in a direction intersecting the longitudinal axis of the extrudate member $A_1$ at right angles, i.e., the width $d_1$ (maximum width) of the joint portion $c_1$ larger than the width $e_1$ of the extrudate member $A_1$ in the same direction ($d_1 > e_1$).

(c) As is shown in Figs.6 and 7, at the joint portion $c_1$ and a longitudinally intermediate portion of the mating member $B_1$, the first planar portion 17 and the flat overhang 13 are matched to each other; the first slope portion 19 and the first inclined portion 11 are matched to each other; the second planar portion 20 and the second flat portion 10 are matched to each other, and the second slope portion 21 and the second inclined portion 12 are matched to each other. In addition, the engaging claw $22_1$ is brought into engagement with the engaging groove $15_1$. This provides a wrapping-in or encircling effect by the joint portion $c_1$, and a latching effect by the engaging groove $15_1$ and the engaging claw $22_1$ and thus, the extrudate member $A_1$ and the mating member $B_1$ are assembled integrally.

(d) The superposed portions of the first planar portion 17 and the flat overhang 13 and the like, are bonded to each other by a bonding means such as a spot-welding, brazing or the like.

In the joining structure, the extrudate member $A_1$ is integrally provided at one end thereof with the joint portion $c_1$ having the shape conformed to the shape of the outer surface of the mating member $B_1$ to encircle a por-

tion of the mating member $B_1$. The joint portion $c_1$ is joined to the outer surface of the longitudinal intermediate portion of the mating member $B_1$ and hence, no separate joint member is used. Therefore, the construction of the joining structure is simplified. In addition, the joint portion $c_1$ is joined to the longitudinally intermediate portion of the mating member $B_1$ in such a manner that it is matched to the outer surface of the longitudinally intermediate portion of the mating member $B_1$ over the relatively large width $d_1$ to encircle a portion of the mating member $B_1$, and therefore, the joining structure has a high joining strength.

On the other hand, in the joining method, by matching joint portion $c_1$ to the outer surface of the mating member $B_1$ and bringing the engaging claw $22_1$ into engagement with the engaging groove $15_1$, the positioning of the extrudate member $A_1$ relative to the mating member $B_1$ can be achieved. Therefore, a joining jig is not required, leading to a good operatability.

Figs.8 to 13 illustrate a second embodiment of the present invention.

Referring to Fig.8, an extrudate member $A_2$ is formed from an aluminum alloy and has a substantially square annular section. Therefore, the extrudate member $A_2$ comprises only a closed sectional structure portion $a_2$ including two sets of opposed sidewall portions 23, 24 and 25, 26.

Referring to Fig.9, a mating member $B_2$ for the extrudate member $A_2$ is produced by an extrusion using an aluminum alloy material, as is the extrudate member $A_2$. The mating member $B_2$ comprises a pair of opposed flat portions 27 and 28, and a pair of arcuate portions 29 and 30 interconnecting two pairs of opposing side edges of the flat portions 27 and 28, respectively, and thus, the mating member $M_1$ is comprised of only a closed sectional structure portion $b_2$. A pair of egnaging grooves $15_2$ are defined in an outer surface of one of the arcuate portions 30 to extend longitudinally of the arcuate portion 30.

In order to joint an end of the extrudate member $A_2$ having the closed sectional structure portion $a_2$ to a longitudinally intermediate portion of the mating member $B_2$ such that they extend across each other, following steps are carried out in sequence:

(a) As shown in Fig.10, portions of the opposed sidewalls 23 and 24 are cut off at the end of the extrudate member $A_2$ to define a pair of notches $16_2$ extending longitudinally of the extrudate member. In this case, an inner end face of each notch $16_2$ is formed into an arcuate shape to conform to a shape of an outer surface of the arcuate portion 29 having no engaging groove $15_2$ in the mating member $B_2$.

(b) As shown in Fig.11, portions around the notches $16_2$ of the extrudate member $A_2$, e.g., tip ends of opposed sidewalls 25 and 26 of the notches $16_2$ in this embodiment, are subjected to a bending as a plastic working, thereby producing a joint portion $c_2$.

The joint portion $c_2$ is formed to have a shape conformed to the shape of the outer surface of the mating member $B_2$, e.g., the shape of an outer surface area extending from one of the engaging grooves $15_2$ via one of the arcuate portions 29 and the other flat portion 28 to the other engaging groove $15_2$ in this embodiment to encircle a portion of the mating member $B_2$. More particularly, the joint portion $c_2$ comprises a planar portion 32 corresponding to one of the flat portions 27 of the mating member $B_2$, arcuate portions 33 which are continuously formed with the planar portion 32 and formed of portions of opposite sidewalls 23 and 24 and which correspond to one of the arcuate portions 29 of the mating member $B_2$, a planar portion 34 continuously formed with the arcuate portions 33 and corresponding to the other flat portion 28 of the mating member $B_2$, arcuate portions 35 continuously formed with the planar portions 32 and 34 and corresponding to a portion of the other arcuate portion 30 of the mating member $B_2$, and engaging claws $22_2$ continuously formed with the arcuate portions 35 and corresponding to the engaging grooves $15_2$ of the mating member $B_2$.

In this case, the length of the joint portion $c_2$ in a direction intersecting the longitudinal axis of the extrudate member $A_2$ at right angles, i.e., the width $d_2$ thereof, is equal to the width $e_2$ of the extrudate member $A_2$ in the same direction ($d_2 = e_2$).

(c) As shown in Figs. 12 and 13, at the joint portion $c_2$ and a longitudinally intermediate portion of the mating member $B_2$, the one planar portion 32 and the one flat portion 27 are matched to each other; the other planar portion 34 and the other flat portion 28 are matched to each other; the arcuate portions 33 and the one arcuate portion 29 are matched to each other; and the arcuate portions 35 and the other arcuate portion 30 are matched to each other. In addition, each of the engaging claws $22_2$ is brought into engagement with corresponding one of the engaging grooves $15_2$. This provides an encircling effect by the joint portion $c_2$, and a latching effect by each of the engaging grooves $15_2$ and each of the engaging claws $22_2$, and thus, the extrudate member $A_2$ and the mating member $B_2$ are assembled into one piece.

(d) The superposed portions of the one planar portion 32 and the one flat portion 27 and the like, are bonded to each other by a bonding means such as a spot-welding, brazing or the like.

With the joint structure and the joining method of the second embodiment, effects similar to those of the first embodiment can be provided.

Alternatively, engaging grooves $15_1$ and $15_2$ may be provided in the joint portions $c_1$ and $c_2$, and engaging

claws $22_1$ and $22_2$ may be provided on the mating members $B_1$ and $B_2$.

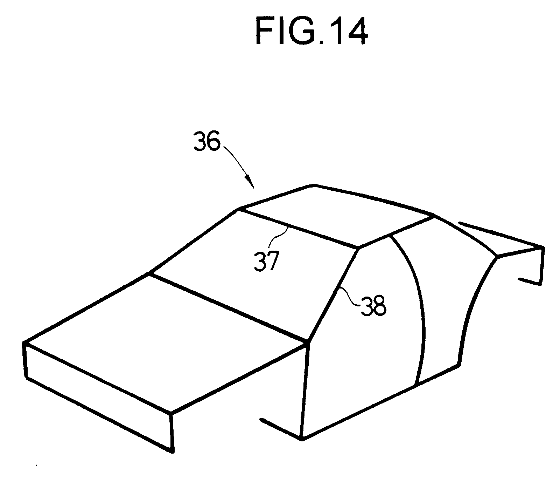

Fig. 14 illustrates a frame structure for a vehicle body. The present invention is applicable to the structure and method for joining, for example, a front roof rail 37 which is an extrudate member of an aluminium alloy, and a front pillar 38 which is an extrudate member

**Claims**

**1.** A joint structure comprising:

an extrudate member ($A_1$, $A_2$) having a closed sectional structure portion and an integral joining region; and
an elongate mating member ($B_1$, $B_2$) having a longitudinal axis;
the joining region including a joint portion ($C_1$, $C_2$) having a shape conformed to a shape of an outer surface of said elongated mating member ($B_1$, $B_2$) so as to encircle at least a portion of said mating member ($B_1$, $B_2$), said joint portion ($C_1$, $C_2$) being joined to the outer peripheral surface of said mating member ($B_1$, $B_2$) and being situated at a longitudinal end of the extrudate member ($A_1$, $A_2$), the longitudinal axis of the extrudate member ($A_1$, $A_2$) intersecting the longitudinal axis of the mating member ($B_1$, $B_2$),
characterized in that

the closed sectional structure portion of said extrudate member ($A_1$, $A_2$) has a polygonal cross-section and

in that the joint portion ($C_1$, $C_2$) is formed by an extension (20, 32, 34) of at least one side of said polygonal-shaped closed sectional structure portion.

**2.** A joint structure as claimed in claim 1, characterized in that one of said joint portion ($C_1$, $C_2$) and said elongated mating member ($B_1$, $B_2$) has an engaging groove ($15_1$, $15_2$), and the other has an engaging claw ($22_1$, $22_2$) for engagement with said engaging groove ($15_1$, $15_2$).

**3.** A joint structure as claimed in claim 1 or 2, characterized in that said elongated mating member ($B_1$) includes a closed sectional structure portion having a substantially dovetailed annular section, said closed sectional structure portion of the mating member including,

(a) a first flat portion (9),
(b) a second flat portion (10) opposed to and shorter than said first flat portion (9),
(c) a first inclined portion (11) interconnecting opposing first side edges of the first and second flat portions (9, 10), and
(d) a second inclined portion (12) interconnecting opposing second side edges of the first and second flat portions (9, 10) and having an engaging groove ($15_1$) provided on an outer surface thereof to extend along the side edge of the second flat portion (10); and
wherein said joint portion ($C_1$) includes:
(e) a first slope portion (19) matched to the first inclined portion (11) of said mating member ($B_1$),
(f) a second planar portion (20) continuously formed with said first slope portion (19) and matched to the second flat portion (10) of said mating member ($B_1$).
(g) a second slope portion (21) continuously formed with said second planar portion (20) and matched to a portion of the second inclined portion (12) of said mating member ($B_1$), and
(h) an engaging claw ($22_1$) continuously formed with said second slope portion (21) and engaged with the engaging groove ($15_1$) in said mating member ($B_1$).

**4.** A joint structure as claimed in claim 3, characterized in that the length ($d_1$) of said joint portion ($C_1$) in a direction intersecting the longitudinal axis of said extrudate member ($A_1$) is longer than the length ($e_1$) of the extrudate member ($B_1$) in the same direction.

**5.** A joint structure as claimed in claim 1, characterized in that said elongated mating member ($B_2$) includes,

a closed sectional structure portion which is comprised of:

(a) a pair of opposed flat portions (27, 28), and
(b) a pair of arcuate portions (29, 30) interconnecting opposed side edges of said flat portions (27, 28), respectively, one (30) of said arcuate portions being formed with a pair of engagement grooves ($15_2$) on an outer surface thereof so as to extend longitudinally of said arcuate portion (30), and wherein said joint portion includes:
(c) one planar portion (32) matched to one (27) of said flat portions of said elongated mating member ($B_2$),
(d) arcuate portions (31) continuously formed with said one planar portion (32) and matched to one (29) of said arcuate portions of said elongated mating member ($B_2$),
(e) another planar portion (34) continuously formed with said arcuate portions (31) and matched to the other flat portion (28) of said elongated mating member ($B_2$),
(f) further arcuate portions (35) continuously formed with said respective planar portions (32, 34) and matched to a portion of the other arcuate portion (30) of said elongated mating member ($B_2$), and

(g) engaging claws ($22_2$) continuously formed with said further arcuate portions (35), respectively, and matched to the engaging grooves ($15_2$) of the elongated mating member ($B_2$), respectively.

**6.** A joint structure as claimed in any one of the preceding claims, characterized in that each of said extrudate member ($A_1$, $A_2$) and said mating member ($B_1$, $B_2$) is formed from an aluminum alloy, and said mating member ($B_1$, $B_2$) is also produced by extrusion.

**7.** A joining structure as claimed in any one of the preceding claims, characterized in that said extrudate member ($A_1$, $A_2$) is a hollow member which has been obtained by extrusion conducted in a direction aligned with the longitudinal axis of the extrudate member ($A_1$, $A_2$), and said joint portions ($C_1$, $C_2$) is obtained by subjecting said integral joining end of the extrudate member to a plastic working.

**8.** A joint structure as claimed in any one of the preceding claims, characterized in that said joint portion ($C_1$, $C_2$) encircles said portion of the mating member ($B_1$, $B_2$) in the extruding direction of the extrudate member ($A_1$, $A_2$).

**9.** A method for joining an extrudate member ($A_1$, $A_2$) and an elongated mating member ($B_1$, $B_2$), in which said extrudate member ($A_1$, $A_2$) has a closed sectional structure portion and an integral joining end for joining to said elongated mating member ($B_1$, $B_2$) characterized in that the method comprises the steps of:

forming a notch ($16_1$, $16_2$) in the integral joining end of the closed sectional structure portion of said extrudate member ($A_1$, $A_2$) so as to extend longitudinally of the extrudate member ($A_1$, $A_2$);
subjecting a portion of the extrudate member ($A_1$, $A_2$) around said notch ($16_1$, $16_2$) to plastic working to provide a joint portion ($C_1$, $C_2$) having a shape conformed to the shape of an outer surface of said mating member ($B_1$, $B_2$) so as to encircle at least a portion of said mating member ($B_1$, $B_2$); and
joining said joint portion ($C_1$, $C_2$) to said outer surface of said mating member ($B_1$, $B_2$) such that the longitudinal axis of said extrudate member ($A_1$, $A_2$) intersects the longitudinal axis of said elongated mating member ($B_1$, $B_2$).

**10.** A method as claimed in claim 9, characterized in that said joining is achieved by engagement between an engaging groove ($15_1$, $15_2$) provided on one of said joint portions ($C_1$, $C_2$) and said mating member ($B_1$, $B_2$) and an engaging claw ($22_1$, $22_2$) provided on the other.

**11.** A joint structure as claimed in claim 1, wherein said elongate mating member ($B_1$, $B_2$) has a polygonal cross-section with at least one side thereof being engaged with said joint portion ($C_1$, $C_2$) of the extrudate member ($A_1$, $A_2$).

**Patentansprüche**

**1.** Verbindungsstruktur, umfassend:

ein Strangpreßelement ($A_1$, $A_2$) mit einem geschlossenen Profilstrukturabschnitt und einem integralen Verbindungsbereich; und ein längliches Gegenelement ($B_1$, $B_2$) mit einer Längsachse;
wobei der Verbindungsbereich einen Verbindungsabschnitt ($C_1$, $C_2$) mit einer einer Außenfläche des länglichen Gegenelements ($B_1$, $B_2$) angepaßten Form aufweist, um wenigstens einen Abschnitt des Gegenelements ($B_1$, $B_2$) zu umgeben, wobei der Verbindungsabschnitt ($C_1$, $C_2$) mit der Außenumfangsfläche des Gegenelements ($B_1$, $B_2$) verbunden ist und bei einem Längsende des Strangpreßelements ($A_1$, $A_2$) angeordnet ist und die Längsachse des Strangpreßelements ($A_1$, $A_2$) die Längsachse des Gegenelements ($E_1$, $E_2$) schneidet, **dadurch gekennzeichnet,** daß der geschlossene Profilstrukturabschnitt des Strangpreßelements ($A_1$, $A_2$) einen polygonalen Querschnitt aufweist und
daß der Verbindungsabschnitt ($C_1$, $C_2$) von einem Fortsatz (20, 32, 34) wenigstens einer Seite des polygonal geformten geschlossenen Profilstrukturabschnitts gebildet ist.

**2.** Verbindungsstruktur nach Anspruch 1, **dadurch gekennzeichnet,** daß eine der Komponenten Verbindungsabschnitt ($C_1$, $C_2$) und längliches Gegenelement ($B_1$, $B_2$) eine Eingriffsnut ($15_1$, $15_2$) aufweist und die andere Komponente eine Eingriffsklaue ($22_1$, $22_2$) zum Eingriff mit der Eingriffsnut ($15_1$, $15_2$) aufweist.

**3.** Verbindungsstruktur nach Anspruch 1 oder 2, **dadurch gekennzeichnet,** daß das längliche Gegenelement ($B_1$) einen geschlossenen Profilstrukturabschnitt mit einem im wesentlichen schwalbenschwanzförmigen Ringquerschnitt aufweist, wobei der geschlossene Profilstrukturabschnitt des Gegenelements umfaßt:

(a) einen ersten ebenen Abschnitt (9),

(b) einen zweiten ebenen Abschnitt (10) gegenüber dem und kürzer als der erste ebene Abschnitt (9),

(c) einen ersten schrägen Abschnitt (11), der gegenüberliegende erste Seitenränder der ersten und zweiten ebenen Abschnitte (9, 10) miteinander verbindet, und

(d) einen zweiten schrägen Abschnitt (12), der gegenüberliegende zweite Seitenränder der ersten und zweiten ebenen Abschnitte (9, 10) miteinander verbindet und eine Eingriffsnut ($15_1$) aufweist, die an seiner Außenfläche derart vorgesehen ist, daß sie sich entlang des Seitenrands des zweiten ebenen Abschnitts (10) erstreckt; und

wobei der Verbindungsabschnitt ($C_1$) umfaßt:

(e) einen ersten Schrägabschnitt (19), der an den ersten schrägen Abschnitt (11) des Gegenelements ($B_1$) angepaßt ist,

(f) einen zweiten planaren Abschnitt (20), der mit dem ersten Schrägabschnitt (19) durchgehend ausgebildet ist und an den zweiten ebenen Abschnitt (10) des Gegenelements ($B_1$) angepaßt ist,

(g) einen zweiten Schrägabschnitt (21), der mit dem zweiten planaren Abschnitt (20) durchgehend ausgebildet ist und an einen Abschnitt des zweiten schrägen Abschnitts (12) des Gegenelements ($B_1$) angepaßt ist, und

(h) eine Eingriffsklaue ($22_1$), die mit dem zweiten Schrägabschnitt (21) durchgehend ausgebildet ist und mit der Eingriffsnut ($15_1$) in dem Gegenelement ($B_1$) in Eingriff ist.

4. Verbindungsstruktur nach Anspruch 3, **dadurch gekennzeichnet,** daß die Länge ($d_1$) des Verbindungsabschnitts ($C_1$) in eine die Längsachse des Strangpreßelements ($A_1$) schneidende Richtung länger ist als die Länge ($e_1$) des Strangpreßelements ($B_1$) in die gleiche Richtung.

5. Verbindungsstruktur nach Anspruch 1, **dadurch gekennzeichnet,** daß das längliche Gegenelement ($B_2$) umfaßt,
einen geschlossenen Profilstruktursabschnitt, der umfaßt:

(a) ein Paar gegenüberliegender ebener Abschnitte (27, 28) und

(b) ein Paar bogenförmiger Abschnitte (29, 30), die jeweils gegenüberliegende Seitenränder der ebenen Abschnitte (27, 28) miteinander verbinden, wobei einer (30) der bogenförmigen Abschnitte mit einem Paar Eingriffsnuten ($15_2$) an seiner Außenfläche derart ausgebildet ist, daß sie sich in Längsrichtung des bogenförmigen Abschnitts (30) erstrecken und wobei der Verbindungsabschnitt umfaßt:

(c) einen planaren Abschnitt (32), der an einen (27) der ebenen Abschnitte des länglichen Gegenelements ($B_2$) angepaßt ist,

(d) bogenförmige Abschnitte (31), die mit dem einen planaren Abschnitt (32) durchgehend ausgebildet sind und an einen (29) der bogenförmigen Abschnitte des länglichen Gegenelements ($B_2$) angepaßt sind,

(e) einen anderen planaren Abschnitt (34), der mit den bogenförmigen Abschnitten (31) durchgehend ausgebildet ist und an den anderen ebenen Abschnitt (28) des länglichen Gegenelements ($B_2$) angepaßt ist,

(f) weitere bogenförmige Abschnitte (35), die mit den jeweiligen planaren Abschnitten (32, 34) durchgehend ausgebildet sind und an einen Abschnitt des anderen bogenförmigen Abschnitts (30) des länglichen Gegenelements ($B_2$) angepaßt sind, und

(g) Eingriffsklauen ($22_2$), die jeweils mit den weiteren bogenförmigen Abschnitten (35) durchgehend ausgebildet sind bzw. an die Eingriffsnuten ($15_2$) des länglichen Gegenelements ($B_2$) angepaßt sind.

6. Verbindungsstruktur nach einem der vorhergehenden Ansprüche, **dadurch gekennzeichnet,** daß jedes Strangpreßelement ($A_1$, $A_2$) und jedes Gegenelement ($B_1$, $B_2$) aus einer Aluminiumlegierung gebildet sind und das Gegenelement ($B_1$, $B_2$) ferner durch ein Strangpreßverfahren hergestellt ist.

7. Verbindungsstruktur nach einem der vorhergehenden Ansprüche, **dadurch gekennzeichnet,** daß das Strangpreßelement ($A_1$, $A_2$) ein hohles Element ist, welches durch ein Strangpreßverfahren erhalten wurde, das in eine Richtung vorgenommen ist, die mit der Längsachse des Strangpreßelements ($A_1$, $A_2$) ausgerichtet ist und die Verbindungsabschnitte ($C_1$, $C_2$) erhalten werden, indem das integrale Verbindungsende des Strangpreßelements einer plastischen Verformung ausgesetzt wird.

8. Verbindungsstruktur nach einem der vorhergehenden Ansprüche, **dadurch gekennzeichnet,** daß der Verbindungsabschnitt ($C_1$, $C_2$) den Abschnitt des Gegenelements ($B_1$, $B_2$) in der Strangpreßrichtung des Strangpreßelements ($A_1$, $A_2$) umgibt.

9. Verfahren zum Verbinden eines Strangpreßelements ($A_1$, $A_2$) und eines länglichen Gegenelements ($B_1$, $B_2$), bei welchem das Strangpreßelement ($A_1$, $A_2$) einen geschlossenen Profilstruktursabschnitt und ein integrales Verbindungsende zum Verbinden mit dem länglichen Gegenelement ($B_1$, $B_2$) aufweist, **dadurch**

**gekennzeichnet,** daß das Verfahren die Schritte umfaßt:

Ausbilden einer Aussparung ($16_1$, $16_2$) in dem integralen Verbindungsende des geschlossenen Profilstrukturabschnitts des Strangpreßelements ($A_1$, $A_2$) derart, daß sie sich in Längsrichtung des Strangpreßelements ($A_1$, $A_2$) erstreckt;
Unterwerfen eines Abschnitts des Strangpreßelements ($A_1$, $A_2$) um die Aussparung ($16_1$, $16_2$) herum einer plastischen Verformung, um einen Verbindungsabschnitt ($C_1$, $C_2$) vorzusehen, der eine der Form einer Außenfläche des Gegenelements ($B_1$, $B_2$) angepaßte Form aufweist, um wenigstens einen Abschnitt des Gegenelements ($B_1$, $B_2$) zu umgeben;
und
Zusammenfügen des Verbindungsabschnitts ($C_1$, $C_2$) mit der Außenfläche des Gegenelements ($B_1$, $B_2$) derart, daß die Längsachse des Strangpreßelements ($A_1$, $A_2$) die Längsachse des länglichen Gegenelements ($B_1$, $B_2$) schneidet.

10. Verfahren nach Anspruch 9, **dadurch gekennzeichnet,** daß das Zusammenfügen durch einen Eingriff zwischen der Eingriffsnut ($15_1$, $15_2$), die an einer der Komponenten: Verbindungsabschnitte ($C_1$, $C_2$) und Gegenelement ($B_1$, $B_2$) vorgesehen ist, und einer Eingriffsklaue ($22_1$, $22_2$), die an der anderen Komponente vorgesehen ist.

11. Verbindungsstruktur nach Anspruch 1, bei welcher das längliche Gegenelement ($B_1$, $B_2$) einen polygonalen Querschnitt aufweist, wobei wenigstens seine eine Seite mit dem Verbindungsabschnitt ($C_1$, $C_2$) des Strangpreßelements ($A_1$, $A_2$) in Eingriff ist.

**Revendications**

1. Une structure d'assemblage comprenant :

un organe extrudé ($A_1$, $A_2$) ayant une partie de structure à section fermée et une zone d'assemblage monobloc; et
un organe d'adaptation allongé ($B_1$, $B_2$) ayant un axe longitudinal;
la zone d'assemblage comprenant une partie d'assemblage ($C_1$, $C_2$) ayant une forme se conformant à la forme de la surface extérieure dudit organe d'adaptation allongé ($B_1$, $B_2$) de manière à encercler au moins une partie dudit organe d'adaptation ($B_1$, $B_2$), ladite partie d'assemblage ($C_1$, $C_2$) étant assemblée à la surface périphérique extérieure dudit organe d'adaptation ($B_1$, $B_2$) et étant situé à une extrémité longitudinale de l'organe extrudé ($A_1$, $A_2$), l'axe longitudinal de l'organe extrudé ($A_1$, $A_2$) coupant l'axe longitudinal de l'organe d'adaptation ($B_1$, $B_2$),
caractérisée en ce que
la partie de structure à section fermée dudit organe extrudé ($A_1$, $A_2$) a une section transversale polygonale, et
en ce que la partie d'assemblage ($C_1$, $C_2$) est formée par une extension (20, 32, 34) d'au moins un côté de ladite partie de structure à section fermée à forme polygonale.

2. Une structure d'assemblage selon la revendication 1, caractérisée en ce qu'un élément, parmi ladite partie d'assemblage ($C_1$, $C_2$) et ledit organe d'adaptation allongé ($B_1$, $B_2$), comporte une gorge de mise en prise ($15_1$, $15_2$) et l'autre élément comporte une griffe de mise en prise ($22_1$ $22_2$) destinée à la mise en prise avec ladite gorge de mise en prise ($15_1$, $15_2$).

3. Une structure d'assemblage selon la revendication 1 ou 2, caractérisée en ce que ledit organe d'adaptation allongé ($B_1$) comprend une partie de structure à section fermée ayant une section annulaire sensiblement en queue d'aronde, ladite partie de structure à section fermée dudit organe d'adaptation comprenant :

(a) une première partie plate (9),
(b) une deuxième partie plate (10) opposée et plus courte que ladite première partie plate (9),
(c) une première partie inclinée (11), interconnectant des premiers bords latéraux opposés des première et deuxième parties plates (9, 10), et
(d) une deuxième partie inclinée (12), interconnectant des deuxième bords latéraux opposés des première et deuxième parties plates (9, 10) et ayant une rainure de mise en prise ($15_1$) ménagée sur une surface extérieure de celle-ci, s'étendant selon le bord latéral de la deuxième partie plate (10); et
dans laquelle ladite partie d'assemblage ($C_1$) comprend :
(e) une première partie en pente (12) adaptée à la première partie inclinée (11) dudit organe d'adaptation ($B_1$),
(f) une deuxième partie plane (20), formée de façon continue avec ladite première partie en bande (19) et adaptée à la deuxième partie plate (10) dudit organe d'adaptation ($B_1$),
(g) une deuxième partie en pente (21), formée de façon continue avec ladite deuxième partie plane (20) et adaptée à une partie de la deuxième partie inclinée (12) dudit organe d'adaptation ($B_1$), et
(h) une griffe de mise en prise ($22_1$), formée de

façon continue avec ladite deuxième partie en pente (21) et mise en prise avec la rainure de mise en prise ($15_1$) ménagée dans ledit organe d'adaptation ($B_1$).

4. Une structure d'assemblage selon la revendication 3, caractérisée en ce que la longueur ($d_1$) de ladite partie d'assemblage ($C_1$) dans une direction coupant l'axe longitudinal dans un direction coupant l'axe longitudinal dudit organe extrudé ($A_1$) est supérieure à la Longueur ($e_1$) de l'organe extrudé ($B_1$), dans la même direction.

5. Une structure d'assemblage selon la revendication 1, caractérisée en ce que ledit organe d'adaptation allongé ($B_2$) comprend :

une partie de structure à section fermée constituée de :

(a) une paire de parties plates opposées (27, 28), et
(b) une paire de parties arquées (29, 30) interconnectant des bords latéraux opposés desdites parties plates (27, 28) respectivement, l'une (30) desdites parties arquées étant formée d'une paire de rainures de mise en prise ($15_2$) prévues sur sa surface extérieure de manière à s'étendre dans la direction longitudinale de ladite partie arquée (30), et dans laquelle ladite partie d'assemblage comprend :
(c) une partie plane (32), adaptée à l'une (27) desdites parties plates dudit organe d'adaptation allongé ($B_2$),
(d) des parties arquées (31), formées de façon continue avec ladite une partie plane (32) et adaptées à une (29) desdites parties arquées dudit organe d'adaptation allongé ($B_2$),
(e) une autre partie plane (34), formée de façon continue avec lesdites parties arquées (31) et adaptées à l'autre partie plate (28) dudit organe d'adaptation allongé ($B_2$),
(f) une autre partie arquée (35), formée de manière continue avec lesdites parties planes (32, 34) respectives et adaptées à une partie de l'autre partie arquée (30) dudit organe d'adaptation allongé ($B_2$), et
(g) des griffes de mise en prise ($22_2$), formées de façon continue avec lesdites autres parties arquées (35), respectivement, et adaptées aux rainures de mise en prise ($15_2$) dudit organe d'adaptation allongé ($B_2$), respectivement.

6. Une structure d'assemblage selon l'une quelconque des revendications précédentes, caractérisée en ce que chaque élément, parmi ledit organe extrudé ($A_1$, $A_2$) et ledit organe d'adaptation ($B_1$, $B_2$), est formé en un alliage d'aluminium et ledit organe d'adaptation ($B_1$, $B_2$) est également produit par extrusion.

7. Une structure d'assemblage selon l'une quelconque des revendications précédentes, caractérisée en ce que ledit organe extrudé ($A_1$, $A_2$) est un organe creux, ayant été obtenu par extrusion conduite dans une direction alignée vis-à-vis de l'axe longitudinal de l'organe extrudé ($A_1$, $A_2$), et lesdites parties d'assemblage ($C_1$, $C_2$) sont obtenues en soumettant ladite extrémité d'assemblage monobloc de l'organe extrudé à un travail plastique.

8. Une structure d'assemblage selon l'une quelconque des revendications précédentes, caractérisée en ce que ladite partie d'assemblage ($C_1$, $C_2$) encercle ladite partie de l'organe d'adaptation ($B_1$, $B_2$) dans la direction d'extrusion de l'organe extrudé ($A_1$, $A_2$).

9. Un procédé d'assemblage d'un organe extrudé ($A_1$, $A_2$) et d'un organe d'adaptation allongé ($B_1$, $B_2$), dans lequel ledit organe extrudé ($A_1$, $A_2$) a une partie de structure à section fermée et une extrémité d'assemblage monobloc destinée à assurer l'assemblage audit organe d'adaptation allongé ($B_1$, $B_2$), caractérisé en ce que le procédé comprend les étapes consistant à :

former une encoche ($16_1$, $16_2$) dans l'extrémité d'assemblage monobloc de la partie de structure à section fermée dudit organe extrudé ($A_1$, $A_2$), de manière à ce qu'elle s'étende dans la direction longitudinale de l'organe extrudé ($A_1$, $A_2$);
soumettre une partie de l'organe extrudé ($A_1$, $A_2$) autour de ladite encoche ($16_1$, $16_2$) à un travail plastique, pour constituer une partie d'assemblage ($C_1$, $C_2$) ayant une forme se conformant à la forme de la surface extérieure dudit organe d'adaptation ($B_1$, $B_2$), de manière à encercler au moins une partie dudit organe d'adaptation ($B_1$, $B_2$); et
assembler ladite partie d'assemblage ($C_1$, $C_2$) à ladite surface extérieure dudit organe d'adaptation ($B_1$, $B_2$) de manière que l'axe longitudinal dudit organe extrudé ($A_1$, $A_2$) coupe l'axe longitudinal dudit organe d'adaptation allongé ($B_1$, $B_2$).

10. Un procédé selon la revendication 9, caractérisé en ce que ledit assemblage est obtenu par mise en prise, entre une rainure de mise en prise ($15_1$, $15_2$), prévu sur un élément parmi lesdites parties

d'assemblage ($C_1$, $C_2$), et ledit organe d'adaptation ($B_1$, $B_2$) et une griffe de mise en prise ($22_1$, $22_2$) prévue sur l'autre élément.

**11.** Une structure d'assemblage selon la revendication 1, dans laquelle ledit organe d'adaptation allongé (B1, B2) a une section transversale polygonale, au moins un côté de celle-ci étant mis en prise avec ladite partie d'assemblage ($C_1$, $C_2$) de l'organe extrudé ($A_1$, $A_2$).

FIG.1

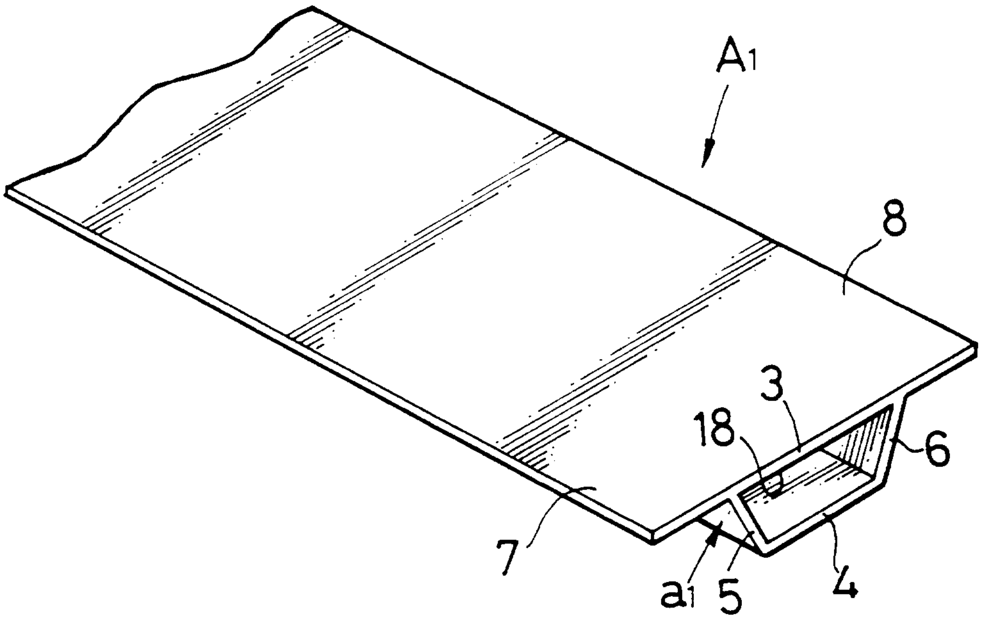


FIG.2

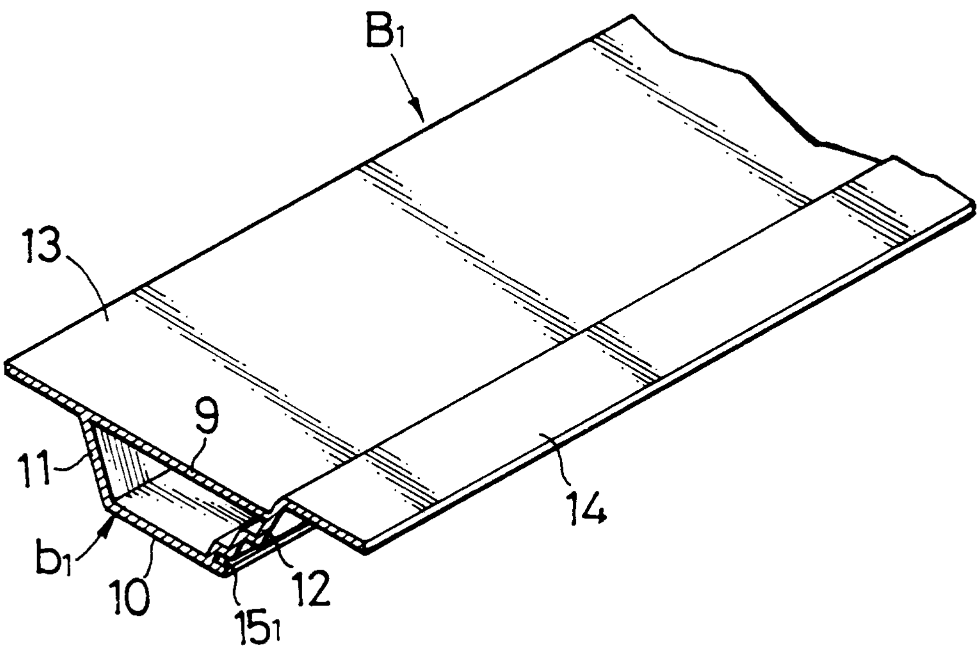

FIG.3

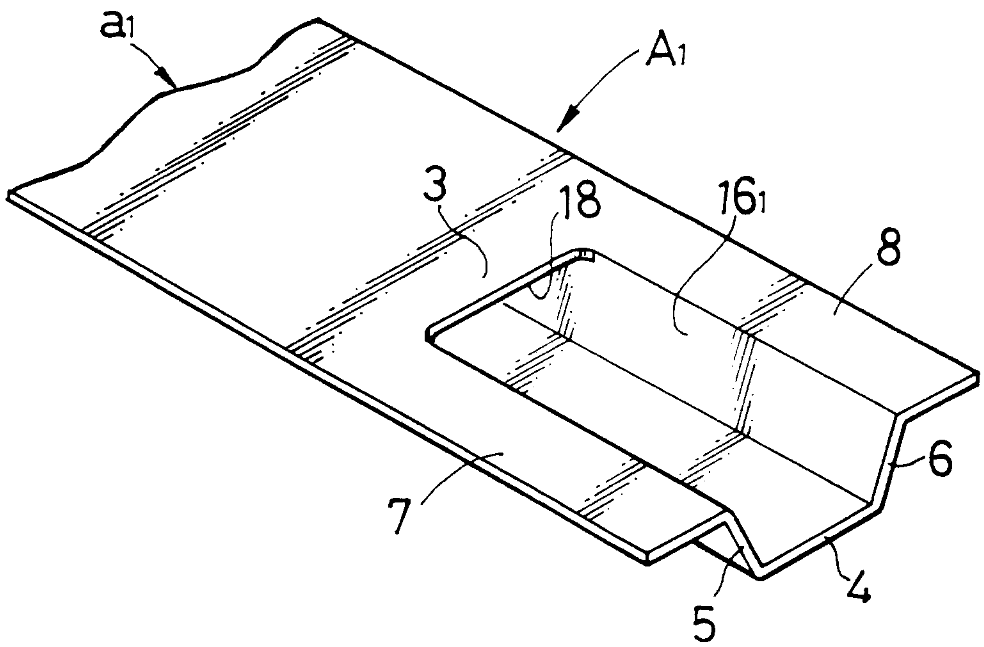


FIG.4

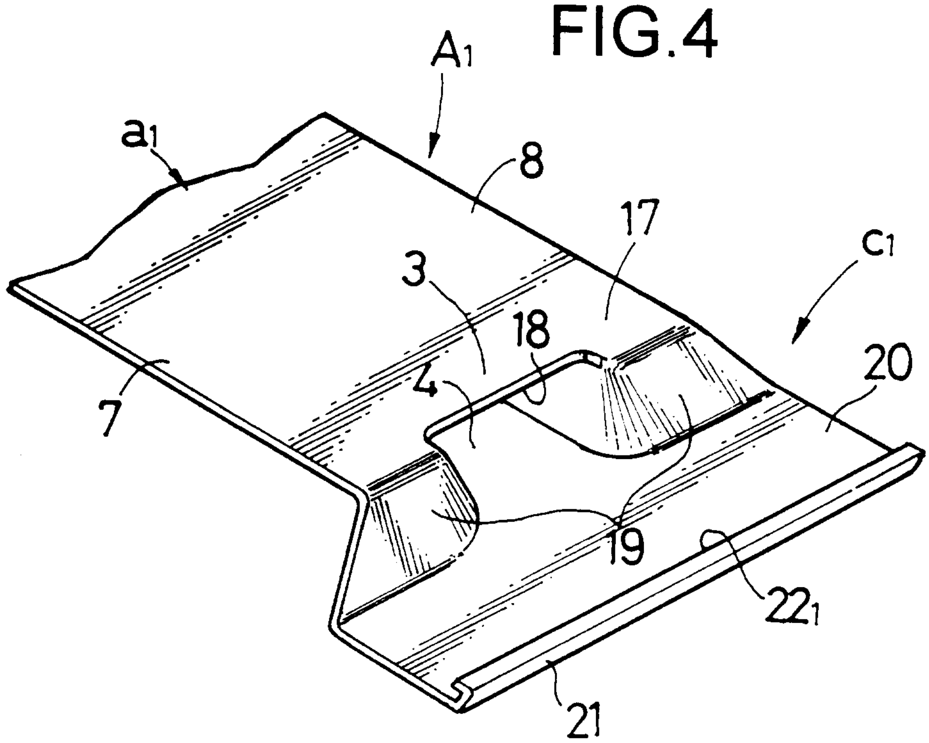

FIG.5

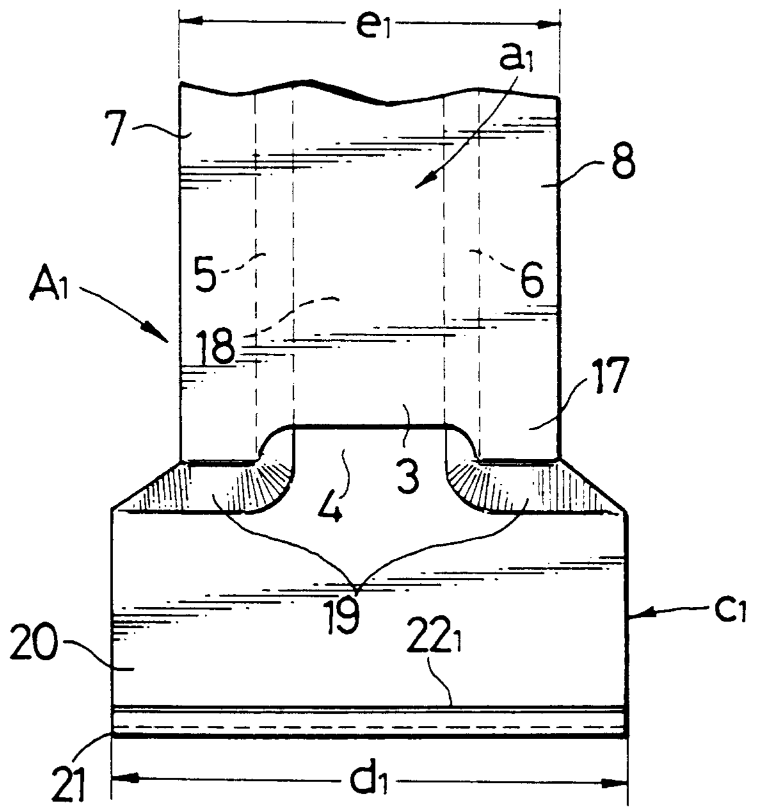
e1
a1
7
8
5
6
A1
18
17
3
4
19
C1
20
221
21
d1

FIG.6

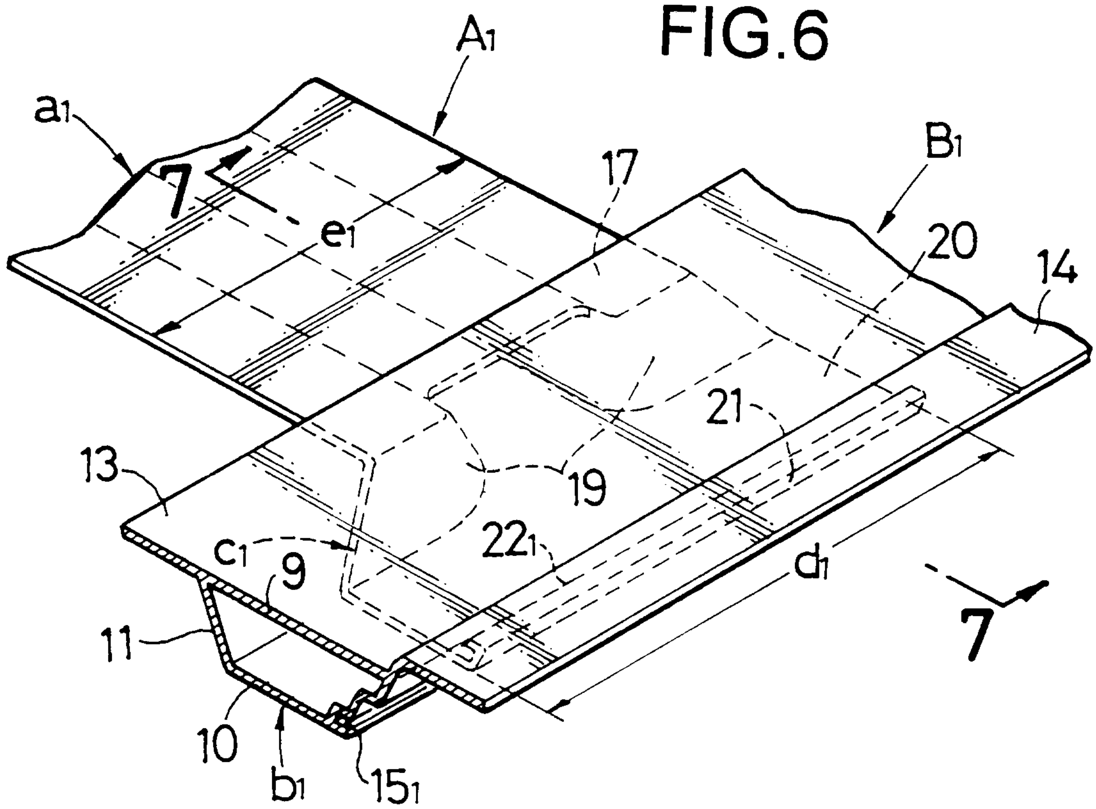
A1
a1
7
e1
17
B1
20
14
21
19
13
C1
9
221
d1
11
7
10
b1
151

FIG.7

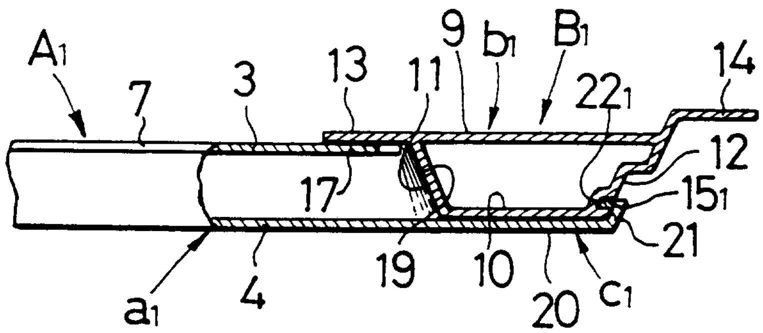

FIG.8

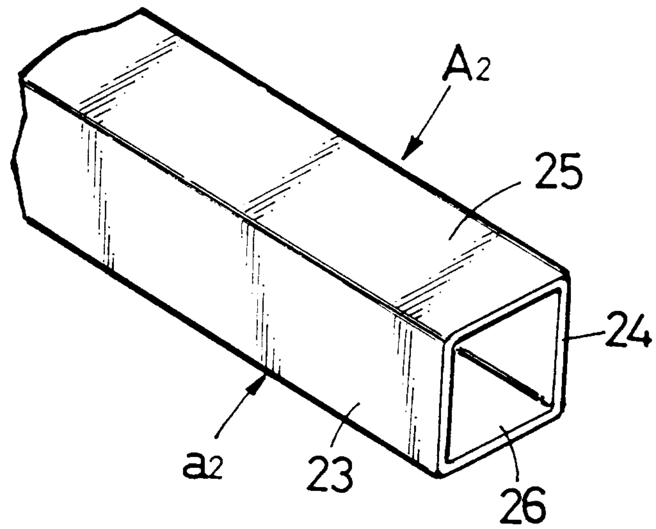


FIG.9

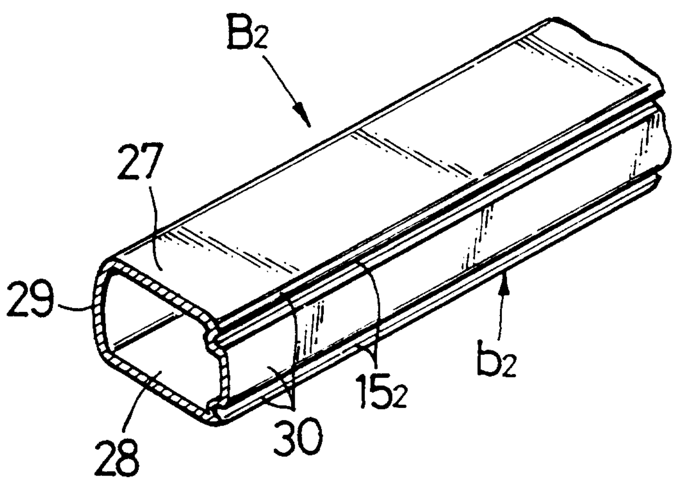

FIG.10

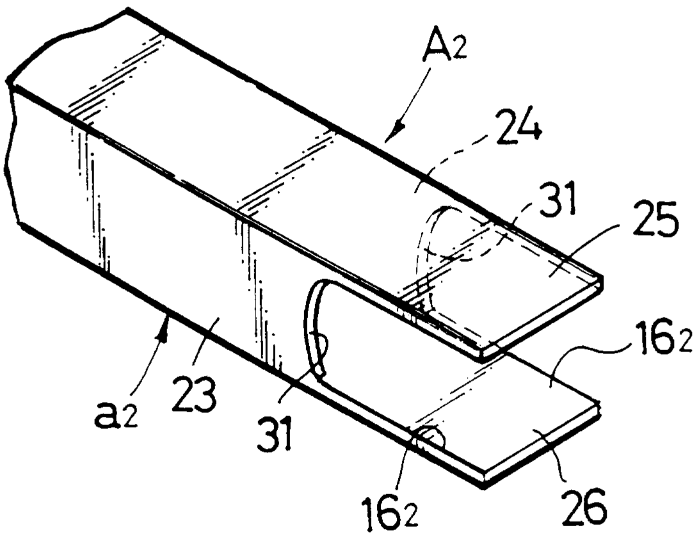
A2
24
31
25
16₂
a2
23
31
16₂
26

FIG.11

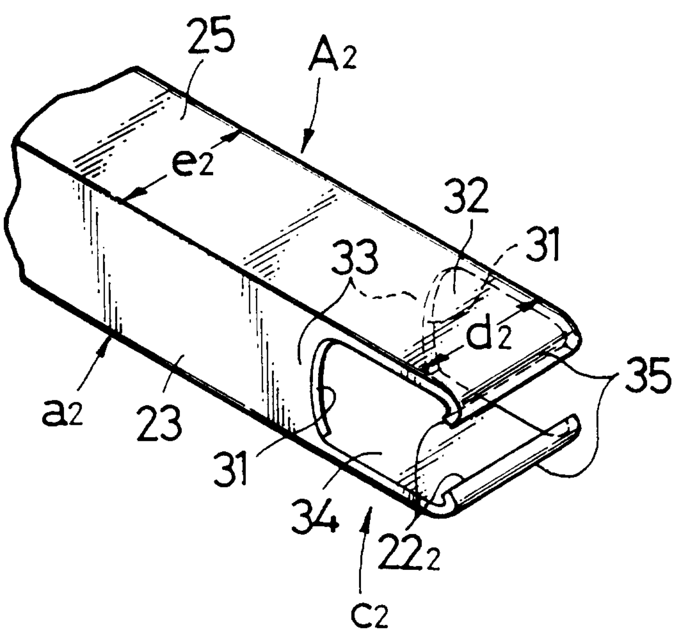
25
A2
e2
32
31
33
d2
35
a2
23
31
34
22₂
c2

FIG.12

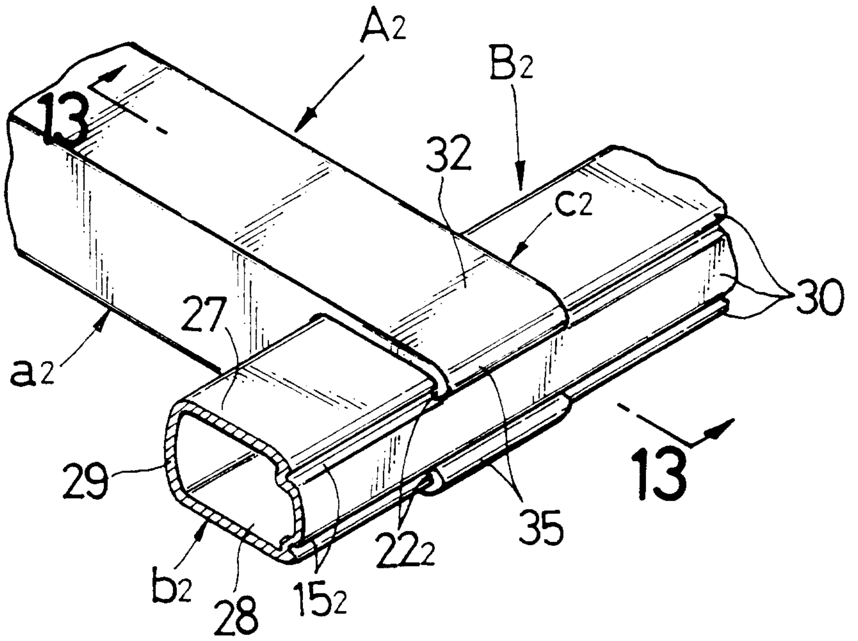
A2
B2
13
32
c2
30
27
a2
29
35
13
22₂
b2
28
15₂

FIG.13

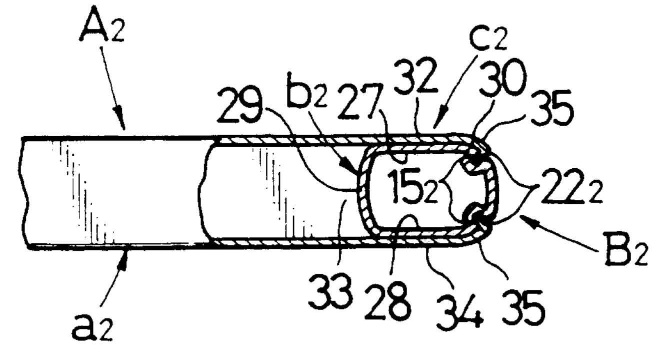
A2
c2
32
30
29
b2
27
35
15₂
22₂
B2
33
28
34
35
a2

FIG.14